# EUROPÄISCHE PATENTSCHRIFT

(11) **EP 3 942 534 B1**
(45) Veröffentlichungstag und Bekanntmachung des Hinweises auf die Patenterteilung: **22.05.2024**
(21) Anmeldenummer: 20702765.7
(22) Anmeldetag: 28.01.2020
(51) Int. Cl.: G07B 15/02, B60C 19/00, G06K 19/077, G07C 9/20

(54) **VERFAHREN ZUR BESTIMMUNG EINER ZEITDIFFERENZ**
METHOD FOR DETERMINING A TIME DIFFERENCE
PROCÉDÉ POUR LA DÉTERMINATION D'UNE DIFFÉRENCE DE TEMPS

(30) Priorität: 21.03.2019 DE 102019203872
(43) Veröffentlichungstag der Anmeldung: 26.01.2022
(73) Patentinhaber: Continental Reifen Deutschland GmbH, 30175 Hannover (DE); Continental Automotive Romania SRL, 300704 Timisoara (RO)
(72) Erfinder: EHMKE, Tobias, 30419 Hannover (DE); HAUPTVOGEL, Jürgen, 30419 Hannover (DE); HADARIG, Andreea, 30419 Hannover (DE)
(74) Vertreter: Continental Corporation
(86) Internationale Anmeldenummer: PCT/EP2020/051962
(87) Internationale Veröffentlichungsnummer: WO 2020/187470

(56) Entgegenhaltungen:
- WO-A1-2018/179171
- DE-A1-102017 216 265
- US-A- 5 414 624
- US-A1- 2017 061 705

## Beschreibung

Die vorliegende Erfindung bezieht sich auf ein Verfahren zur Bestimmung einer Zeitdifferenz nach Anspruch 1.

Die Erfindung geht aus von einem Verfahren zur Bestimmung einer Zeitdifferenz.

Aus dem Stand der Technik sind Verfahren zur Bestimmung von Zeitdifferenzen bekannt. Dabei ist es aus dem Stand der Technik insbesondere bekannt, solche Zeitdifferenzen zu bestimmen, die beispielsweise zwischen einem Einfahrtszeitpunkt und einem Ausfahrtszeitpunkt eines Kraftfahrzeuges in einem Parkhaus liegen können.

Dabei ist es aus dem Stand der Technik auch bekannt, dass zu einem Verlassen eines Parkhauses die Entrichtung eines Geldbetrages, der im Zusammenhang der Zeitdifferenz steht, vorgenommen werden muss. Insbesondere die Entrichtung des Geldbetrages ist zumeist mit einem erhöhten Aufwand verbunden.

Die US 5 414 624 A offenbart ein solches Verfahren.

Die WO 2018/179171 A1 offenbart ein ähnliches Vorgehen im Kontext einer Mauterfassung, in welchem aber keine Zeitdifferenz bestimmt wird.

Aus der US 2017/061705 A1 ist ein Parkzeitbestimmungsverfahren auf offener Straße bekannt.

Die DE 10 2017 216265 A1 beschreibt Fahrzeugreifen mit integrierten RFID Transpondern.

Der Erfindung liegt daher die Aufgabe zugrunde, ein verbessertes Verfahren zur Bestimmung einer Zeitdifferenz bereitzustellen, mittels dem insbesondere die Entrichtung eines Geldbetrages leichter und aufwandsärmer gestaltet werden kann.

Gelöst wird die gestellte Aufgabe dadurch, dass das Verfahren folgende Schritte aufweist:
a. Bereitstellen eines Kraftfahrzeugs, wobei das Kraftfahrzeug eine erste RFID-Vorrichtung aufweist, wobei auf der ersten RFID-Vorrichtung eine Identifikations-Information gespeichert und die Identifikations-Information zur Identifizierung des Kraftfahrzeugs vorgesehen ist und dem Kraftfahrzeug zugeordnet werden kann
b. Bereitstellen einer Kommunikationsvorrichtung, wobei die Kommunikationsvorrichtung zu einer Durchführung eines elektronischen Zahlungsverkehrs vorgesehen ist;
c. Bereitstellen einer ersten Erfassungsvorrichtung, wobei die erste Erfassungsvorrichtung zu einem Austausch von Funksignalen mit der ersten RFID-Vorrichtung vorgesehen ist und wobei die erste Erfassungsvorrichtung zu einem Austausch von Funksignalen mit der Kommunikationsvorrichtung vorgesehen ist;
d. Austauschen eines Funksignals zwischen der ersten RFID-Vorrichtung und der ersten Erfassungsvorrichtung zu einem Startzeitpunkt;
e. Austauschen eines Funksignals zwischen der ersten RFID-Vorrichtung und der ersten Erfassungsvorrichtung zu einem Endzeitpunkt;
f. Bestimmen einer Zeitdifferenz zwischen dem Startzeitpunkt und dem Endzeitpunkt. Bei einer Zeitdifferenz handelt es sich beispielsweise um eine Zeitdauer oder um eine Zeitspanne.

Die erste RFID-Vorrichtung ist insbesondere in einem Reifen des Kraftfahrzeugs oder an einem Reifen des Kraftfahrzeugs angeordnet.

RFID bedeutet Radio Frequency Identification, also Identifikation unter Nutzung elektromagnetischer Wellen.

Durch den erfindungsgemäßen Umstand, wonach das Verfahren zur Bestimmung einer Zeitdifferenz die erfindungsgemäßen Schritte a bis f aufweist, wird ein Verfahren ermöglicht, das vollständig automatisiert durchgeführt werden kann. Dadurch, dass das Verfahren vollständig automatisiert durchgeführt werden kann, kann das Verfahren selbst schneller, einfacher und weniger fehleranfällig durchgeführt werden.

Somit wird ein verbessertes Verfahren bereitgestellt.

Diese Offenbarung betrifft ferner ein Kraftfahrzeug, aufweisend eine erste RFID-Vorrichtung, wobei auf der ersten RFID-Vorrichtung eine Identifikation-Information gespeichert ist und die Identifikations-Information zur Identifizierung des Kraftfahrzeugs vorgesehen ist, und insbesondere aufweisend eine Kommunikationsvorrichtung, wobei die Kommunikationsvorrichtung zu einer Durchführung eines elektronischen Zahlungsverkehrs vorgesehen ist.

Bei einer Kommunikationsvorrichtung handelt es sich um ein Smartphone, mittels dessen auf elektromagnetischem Wege ein Austausch von Signalen und ein Austausch von solchen Informationen vorgenommen wird, die der Ermöglichung eines elektronischen Zahlungsverkehrs dienen.

Insbesondere kann das Kraftfahrzeug die Kommunikationsvorrichtung aufweisen oder der Fahrzeugführer des Kraftfahrzeugs weist eine Kommunikationsvorrichtung auf oder führt eine Kommunikationsvorrichtung mit sich.

Diese Offenbarung betrifft ferner einen Reifen, aufweisend eine erste RFID-Vorrichtung, wobei auf der ersten RFID-Vorrichtung eine einem Kraftfahrzeug zuordnungsfähige Identifikations-Information gespeichert ist, und/oder aufweisend eine zweite RFID-Vorrichtung, wobei auf der zweiten RFID-Vorrichtung eine weitere dem Kraftfahrzeug zuordnungsfähige Identifikation-Information gespeichert ist.

Bei dem Reifen handelt es sich insbesondere um einen PKW-Reifen oder um einen LKW-Reifen.

Das Kraftfahrzeug weist insbesondere den obengenannten Reifen auf.

Diese Offenbarung betrifft schließlich ein System zur Sperrung eines Weges eines Kraftfahrzeugs, aufweisend eine erste Erfassungsvorrichtung, wobei die erste Erfassungsvorrichtung zu einem Austausch von Funksignalen mit einer ersten RFID-Vorrichtung und/oder mit einer zweiten RFID-Vorrichtung und/oder mit einer Kommunikationsvorrichtung vorgesehen ist. Das System kann beispielsweise auf einem Parkplatz oder in einem Parkhaus oder in einer Garage angewendet werden.

Gemäß der Erfindung weist das Verfahren folgende weitere Schritte auf
g. Eindeutiges Zuordnen einer Information über einen Geldbetrag zu der bestimmten Zeitdifferenz;
h. Austauschen eines Funksignals zwischen der Kommunikationsvorrichtung und der ersten Erfassungsvorrichtung zur Übermittlung und Zahlung eines Geldbetrages.

Gemäß der Erfindung ist das Verfahren durch die weiteren Schritte gekennzeichnet:
i. Bereitstellen einer Schrankenvorrichtung, wobei die Schrankenvorrichtung zur Sperrung eines Weges des Kraftfahrzeugs vorgesehen ist;
j. Bereitstellen einer Auswertevorrichtung, wobei die Auswertevorrichtung zu einem Austausch von Signalen mit der ersten Erfassungsvorrichtung vorgesehen ist und wobei die Auswertevorrichtung mit der Schrankenvorrichtung derart verbunden ist, dass in Abhängigkeit eines Signals der Auswertevorrichtung die Schrankenvorrichtung derart gesteuert werden kann, dass die Sperrung des Weges des Kraftfahrzeugs aufgehoben oder vorgenommen werden kann;
k. Austauschen eines Signals zwischen der Auswertevorrichtung und der ersten Erfassungsvorrichtung;
1. Öffnen der Schrankenvorrichtung in Abhängigkeit des Austauschs des Signals zwischen der Auswertevorrichtung und der ersten Erfassungsvorrichtung.

Dabei wird die Schrankenvorrichtung insbesondere in Abhängigkeit des Austauschs des Signals zwischen der Auswertevorrichtung und der ersten Erfassungsvorrichtung geöffnet, wenn die Schrankenvorrichtung zuvor geschlossen ist. Für den Fall, wonach die Schrankenvorrichtung schon offen ist, wird der Zustand nicht verändert und die Schrankenvorrichtung im offenen Zustand belassen.

Die Auswertevorrichtung kann beispielsweise zu einem Austausch von Funksignalen mit der ersten Erfassungsvorrichtung eingerichtet sein.

Die Auswertevorrichtung und die erste Erfassungsvorrichtung können alternativ oder zusätzlich auch über ein Übertragungsmittel, beispielswiese einem Kabel, miteinander verbunden sein. Über das Übertragungsmittel können beispielsweise elektrische Signale übertragen werden.

Die Auswertevorrichtung kann beispielsweise zu einem Austausch von Funksignalen mit der Schrankenvorrichtung eingerichtet sein.

Die Auswertevorrichtung und die Schrankenvorrichtung können alternativ oder zusätzlich auch über ein Übertragungsmittel, beispielswiese einem Kabel, miteinander verbunden sein. Über das Übertragungsmittel können beispielsweise elektrische Signale übertragen werden.

Gemäß der Erfindung ist das Verfahren durch die folgenden weiteren Schritte gekennzeichnet:
- Bereitstellen einer zweiten RFID-Vorrichtung, wobei die zweite RFID-Vorrichtung in einem Reifen des Kraftfahrzeugs angeordnet ist oder an einem Reifen des Kraftfahrzeugs angeordnet ist, wobei auf der zweiten RFID-Vorrichtung eine weitere Identifikations-Information gespeichert ist und die weitere Identifikations-Information zur Identifizierung des Kraftfahrzeugs vorgesehen ist und dem Kraftfahrzeug zugeordnet werden kann und wobei die erste Erfassungsvorrichtung zu einem Austausch von Funksignalen mit der ersten RFID-Vorrichtung und mit der zweiten RFID-Vorrichtung und mit der Kommunikationsvorrichtung vorgesehen ist;
- wobei nach dem Austausch eines Funksignals zwischen der ersten RFID-Vorrichtung und der ersten Erfassungsvorrichtung zu einem Startzeitpunkt ein Funksignal zwischen der zweiten RFID-Vorrichtung und der ersten Erfassungsvorrichtung zu einem ersten Kontrollzeitpunkt ausgetauscht wird, wobei der erste Kontrollzeitpunkt zeitlich später als der Startzeitpunkt liegt;
- wobei nach dem Austausch eines Funksignals zwischen der ersten RFID-Vorrichtung und der ersten Erfassungsvorrichtung zu einem Endzeitpunkt ein Funksignal zwischen der zweiten RFID-Vorrichtung und der ersten Erfassungsvorrichtung zu einem zweiten Kontrollzeitpunkt ausgetauscht wird, wobei der zweite Kontrollzeitpunkt zeitlich später als der Endzeitpunkt liegt;
- wobei die Zeitdifferenz zwischen dem Startzeitpunkt und dem Endzeitpunkt in Abhängigkeiten des Kontrollzeitpunktes und des zweiten Kontrollzeitpunktes bestimmt wird.

Durch den erfindungsgemäßen Umstand, wonach das Verfahren die vorgenannten Schritte aufweist, kann die Zuverlässigkeit der Bestimmung einer Zeitdifferenz erhöht werden.

Bei dem Reifen, in dem oder an dem die zweite RFID-Vorrichtung angeordnet ist, kann es sich gemäß sämtlicher Ausführungsformen um denselben oder um einen anderen Reifen handeln, als wie um den Reifen, in dem oder an dem die erste RFID-Vorrichtung angeordnet sein kann.

Gemäß einer Ausgestaltung eines Kraftfahrzeuges welches im erfinderischen Verfahren bereitgestellt wird ist also eine zweite RFID-Vorrichtung an dem Kraftfahrzeug angeordnet. Dabei ist auf der zweiten RFID-Vorrichtung eine weitere dem Kraftfahrzeug zuordnungsfähige Identifikations-Information gespeichert. Die weitere Identifikations-Information, die auf der zweiten RFID-Vorrichtung gespeichert ist, ist von der Identifikations-Information, die auf der ersten RFID-Vorrichtung gespeichert ist, insbesondere verschieden und unterscheidbar. Mittels der ersten Erfassungsvorrichtung können die Identifikations-Information, die auf der ersten RFID-Vorrichtung gespeichert ist, und die weitere Identifikations-Information, die auf der zweiten RFID-Vorrichtung gespeichert ist, erfasst werden. Mittels der Auswertevorrichtung können die Identifikations-Information, die auf der ersten RFID-Vorrichtung gespeichert ist, und die weitere Identifikations-Information, die auf der zweiten RFID-Vorrichtung gespeichert ist, miteinander verglichen und dieser Vergleich ausgewertet werden. Dieser Vergleich und die Auswertung werden mittels einer Auswertevorrichtung insbesondere bei einer Einfahrt in ein Parkhaus und bei einer Ausfahrt aus einem Parkhaus durchgeführt, um beispielsweise eine genaue Zeitspanne zu bestimmen, während der das Kraftfahrzeug innerhalb des Parkhauses gewesen ist.

Das Kraftfahrzeug weist ein Rad mit einem Reifen auf. Dabei kann die erste RFID-Vorrichtung in oder an dem Reifen angeordnet sein.

Gemäß einer nächsten Ausgestalungsform des Kraftfahrzeuges weist das Kraftfahrzeug ein Rad mit einem Reifen auf, wobei die erste RFID-Vorrichtung und die zweite RFID-Vorrichtung in oder an dem Reifen angeordnet sind, oder, dass das Kraftfahrzeug ein Rad mit einem Reifen aufweist, wobei die erste RFID-Vorrichtung in oder an dem Reifen angeordnet ist, und das Kraftfahrzeug ein weiteres Rad mit einem weiteren Reifen ausweist, wobei die zweite RFID-Vorrichtung in oder an dem weiteren Reifen angeordnet ist.

Gemäß einer nächsten vorzugsweisen Ausgestaltungsform des Kraftfahrzeuges handelt es sich bei der Kommunikationsvorrichtung um ein Smartphone oder eine NFC-Vorrichtung. NFC bedeutet Near Field Communication.

Gemäß einer nächsten vorzugsweisen Ausgestaltungsform weist das System eine zweite Erfassungsvorrichtung auf, wobei die zweite Erfassungsvorrichtung zu einem Austausch von Funksignalen mit einer ersten RFID-Vorrichtung und/oder mit einer zweiten RFID-Vorrichtung und/oder mit einer Kommunikationsvorrichtung vorgesehen ist.

Mittels der zweiten Erfassungsvorrichtung können die Identifikations-Information, die auf der ersten RFID-Vorrichtung gespeichert ist, und die weitere Identifikations-Information, die auf der zweiten RFID-Vorrichtung gespeichert ist, erfasst werden.

Gemäß einer nächsten vorzugsweisen Ausgestaltungsform des Systems weist das System eine Schrankenvorrichtung auf, wobei die Schrankenvorrichtung zur Sperrung eines Weges eines Kraftfahrzeuges vorgesehen ist, und wobei das System eine Auswertevorrichtung aufweist, wobei die Auswertevorrichtung zu einem Austausch von Signalen mit der ersten Erfassungsvorrichtung vorgesehen ist und wobei die Auswertevorrichtung mit der Schrankenvorrichtung derart verbunden ist, dass in Abhängigkeit eines Signals der Auswertevorrichtung die Schrankenvorrichtung derart gesteuert werden kann, dass die Sperrung des Weges des Kraftfahrzeugs aufgehoben und vorgenommen werden kann.

Gemäß einer nächsten vorzugsweisen Ausgestaltungsform des Systems weist das System eine Schrankenvorrichtung auf, wobei die Schrankenvorrichtung zur Sperrung eines Weges eines Kraftfahrzeugs vorgesehen ist, und wobei das System eine Auswertevorrichtung aufweist, wobei die Auswertevorrichtung zu einem Austausch von Signalen mit der ersten Erfassungsvorrichtung und/oder mit der zweiten Erfassungsvorrichtung vorgesehen und wobei die Auswertevorrichtung mit der Schrankenvorrichtung derart verbunden ist, dass in Abhängigkeit eines Signals der Auswertevorrichtung die Schrankenvorrichtung derart gesteuert werden kann, dass die Sperrung des Weges des Kraftfahrzeuges aufgehoben oder vorgenommen werden kann. Die Auswertevorrichtung und die erste Erfassungsvorrichtung beziehungsweise die Auswertevorrichtung und die zweite Erfassungsvorrichtung können alternativ oder zusätzlich auch über ein Übertragungsmittel, beispielswiese einem Kabel, miteinander verbunden sein. Über das Übertragungsmittel können beispielsweise elektrische Signale übertragen werden.

Die Auswertevorrichtung und die erste Erfassungsvorrichtung beziehungsweise die Auswertevorrichtung und die zweite Erfassungsvorrichtung können alternativ oder zusätzlich über Funksignale miteinander verbindbar sein.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines Kraftfahrzeugs,
Fig. 2: eine schematische Darstellung eines Reifens;
Fig. 3: eine schematische Darstellung eines Systems

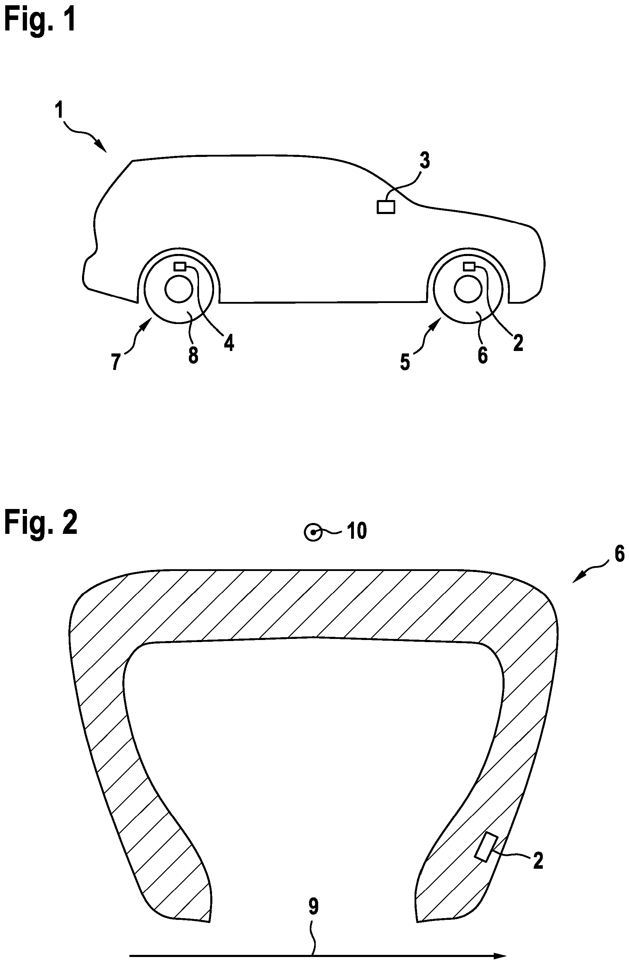

In der Figur 1 ist ein Kraftfahrzeug 1 schematisch dargestellt. Das Kraftfahrzeug 1 weist eine erste RFID-Vorrichtung 2 auf. Auf der ersten RFID-Vorrichtung 2 ist eine Identifikations-Information gespeichert. Die Identifikations-Information ist zur Identifizierung des Kraftfahrzeugs 1 vorgesehen. Das Kraftfahrzeug 1 weist ferner eine Kommunikationsvorrichtung 3 auf. Die Kommunikationsvorrichtung 3 ist zu einer Durchführung eines elektronischen Zahlungsverkehrs vorgesehen. Gemäß der in der Figur 1 dargestellten Ausführungsform ist die Kommunikationsvorrichtung 3 Bestandteil des Kraftfahrzeugs 1. Gemäß einer anderen Ausführungsform kann ein in der Figur 1 nicht dargestellter Kraftfahrzeugführer oder ein anderer Fahrzeuggast die Kommunikationsvorrichtung 3 auch in Form eines Smartphones bei sich führen. Insbesondere weist das Kraftfahrzeug 1 eine zweite RFID-Vorrichtung 4 auf. Wobei die zweite RFID-Vorrichtung 4 an dem Kraftfahrzeug 1 angeordnet ist. Auf der zweiten RFID-Vorrichtung 4 ist eine weitere dem Kraftfahrzeug 1 zuordnungsfähige Identifikations-Information gespeichert.

Ferner weist das Kraftfahrzeug 1 insbesondere ein Rad 5 mit einem Reifen 6 auf. Dabei ist gemäß der in der Figur 1 schematisch dargestellten Ausführungsform die erste RFID-Vorrichtung 2 insbesondere an oder in dem Reifen 6 angeordnet.

Ferner weist das Kraftfahrzeug 1 beispielsweise ein weiteres Rad 7 mit einem weiteren Reifen 8 auf, wobei gemäß der in der Figur 1 schematisch dargestellten Ausführungsform die zweite RFID-Vorrichtung 4 an oder in dem weiteren Reifen 8 angeordnet ist.

In der Figur 2 ist ein Reifen 6 schematisch dargestellt. Der Reifen 6 weist eine erste RFID-Vorrichtung 2 auf. Der Reifen 6 ist in Radialschnittansicht dargestellt und ist um eine Rotationsachse 9 in eine Umfangsrichtung 10 rotierbar.

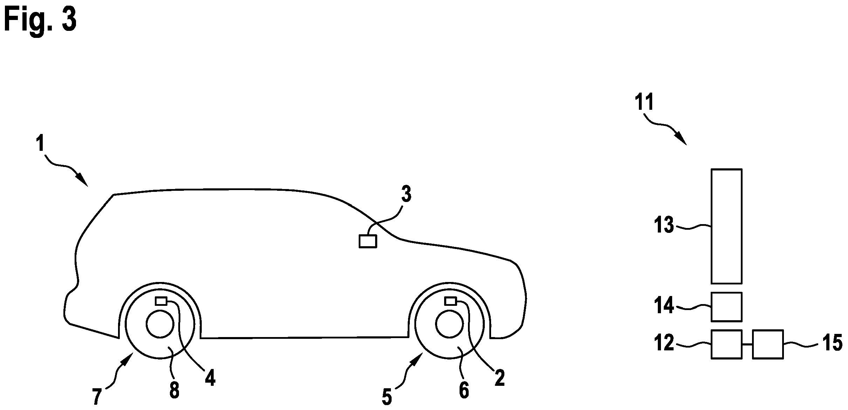

In der Figur 3 ist ein System 11 zur Sperrung eines Weges eines Kraftfahrzeugs 1 schematisch dargestellt. Das System 11 weist eine erste Erfassungsvorrichtung 12 auf. Die erste Erfassungsvorrichtung 12 ist zu einem Austausch von Funksignalen mit einer ersten RFID-Vorrichtung 2 und/oder mit einer zweiten RFID-Vorrichtung 4 und/oder mit einer Kommunikationsvorrichtung 3 vorgesehen. Die erste Erfassungsvorrichtung 12 ist insbesondere auch zu einem Austausch von Funksignalen mit einer zweiten RFID-Vorrichtung 4 vorgesehen.

Beispielsweise weist das System 11 eine Schrankenvorrichtung 13 auf. Die Schrankenvorrichtung 13 ist zur Sperrung eines Weges des Kraftfahrzeugs 1 vorgesehen.

Das System 11 weist ferner eine Auswertevorrichtung 14 auf, wobei die Auswertevorrichtung 14 zu einem Austausch von Signalen mit der ersten Erfassungsvorrichtung 12 und/oder mit einer zweiten Erfassungsvorrichtung 15 vorgesehen ist. Dabei ist die Auswertevorrichtung 14 mit der Schrankenvorrichtung 13 derart verbunden, dass in Abhängigkeit eines Signals der Auswertevorrichtung 14 die Schrankenvorrichtung 13 derart gesteuert werden kann, dass die Sperrung des Weges des Kraftfahrzeuges 1 aufgehoben oder vorgenommen werden kann.

### Bezugszeichenliste

### (ist Teil der Beschreibung)

- 1: Kraftfahrzeug
- 2: Erste RFID-Vorrichtung
- 3: Kommunikationsvorrichtung
- 4: Zweite RFID-Vorrichtung
- 5: Rad
- 6: Reifen
- 7: Weiteres Rad
- 8: Weiterer Reifen
- 9: Rotationsachse
- 10: Umlaufrichtung
- 11: System
- 12: Erste Erfassungsvorrichtung
- 13: Schrankenvorrichtung
- 14: Auswertevorrichtung
- 15: Zweite Erfassungsvorrichtung

## Patentansprüche

1. Verfahren zur Bestimmung einer Zeitdifferenz, aufweisend die Schritte:
- a) Bereitstellen eines Kraftfahrzeugs (1), wobei das Kraftfahrzeug (1) eine erste RFID-Vorrichtung (2) aufweist, wobei auf der ersten RFID-Vorrichtung (2) eine Identifikations-Information gespeichert ist und die Identifikations-Information zur Identifizierung des Kraftfahrzeugs (1) vorgesehen ist und dem Kraftfahrzeug (1) zugeordnet werden kann,
- b) Bereitstellen einer Kommunikationsvorrichtung (3), wobei die Kommunikationsvorrichtung (3) zu einer Durchführung eines elektronischen Zahlungsverkehrs vorgesehen ist, wobei es sich bei der Kommunikationsvorrichtung um ein Smartphone handelt;
- c) Bereitstellen einer ersten Erfassungsvorrichtung (12), wobei die erste Erfassungsvorrichtung (12) zu einem Austausch von Funksignalen mit der ersten RFID-Vorrichtung (2) vorgesehen ist und wobei die erste Erfassungsvorrichtung (12) zu einem Austausch von Funksignalen mit der Kommunikationsvorrichtung (3) vorgesehen ist;
- d) Austauschen eines Funksignals zwischen der ersten RFID-Vorrichtung (2) und der ersten Erfassungsvorrichtung (12) zu einem Startzeitpunkt;
- e) Austauschen eines Funksignals zwischen der ersten RFID-Vorrichtung (2) und der ersten Erfassungsvorrichtung (12) zu einem Endzeitpunkt;
- f) Bestimmen einer Zeitdifferenz zwischen dem Startzeitpunkt und dem Endzeitpunkt.
- g) Eindeutiges Zuordnen einer Information über einen Geldbetrag zu der bestimmten Zeitdifferenz;
- h) Austauschen eines Funksignals zwischen der Kommunikationsvorrichtung (3) und der ersten Erfassungsvorrichtung (12) zur Übermittlung einer Zahlung des Geldbetrages;
- i) Bereitstellen einer Schrankenvorrichtung (13), wobei die Schrankenvorrichtung (13) zur Sperrung eines Weges des Kraftfahrzeugs (1) vorgesehen ist;
- j) Bereitstellen einer Auswertevorrichtung (14), wobei die Auswertevorrichtung (14) zu einem Austausch von Signalen mit der ersten Erfassungsvorrichtung (12) vorgesehen ist und wobei die Auswertevorrichtung (14) mit der Schrankenvorrichtung (13) derart verbunden ist, dass in Abhängigkeit eines Signals der Auswertevorrichtung (14) die Schrankenvorrichtung (13) derart gesteuert werden kann, dass die Sperrung des Weges des Kraftfahrzeugs (1) aufgehoben oder vorgenommen werden kann;
- k) Austauschen eines Signals zwischen der Auswertevorrichtung (14) und der ersten Erfassungsvorrichtung (12);
- l) Öffnen der Schrankenvorrichtung (13) in Abhängigkeit des Austauschs des Signals zwischen der Auswertevorrichtung (14) und der ersten Erfassungsvorrichtung (12);
- Bereitstellen einer zweiten RFID-Vorrichtung (4), wobei die zweite RFID-Vorrichtung (4) in einem Reifen (6, 8) des Kraftfahrzeugs (1) angeordnet ist oder an einem Reifen (6, 8) des Kraftfahrzeugs (1) angeordnet ist, wobei auf der zweiten RFID-Vorrichtung (4) eine weitere Identifikations-Information gespeichert ist und die weitere Identifikations-Information zur Identifizierung des Kraftfahrzeugs (1) vorgesehen ist und dem Kraftfahrzeug (1) zugeordnet werden kann und wobei die erste Erfassungsvorrichtung (12) zu einem Austausch von Funksignalen mit der ersten RFID-Vorrichtung (2) und mit der zweiten RFID-Vorrichtung (4) und mit der Kommunikationsvorrichtung (3) vorgesehen ist,
- wobei nach dem Austausch eines Funksignals zwischen der ersten RFID-Vorrichtung (2) und der ersten Erfassungsvorrichtung (12) zu einem Startzeitpunkt ein Funksignal zwischen der zweiten RFID-Vorrichtung (4) und der ersten Erfassungsvorrichtung (12) zu einem ersten Kontrollzeitpunkt ausgetauscht wird, wobei der erste Kontrollzeitpunkt zeitlich später als der Startzeitpunkt liegt;
- wobei nach dem Austausch eines Funksignals zwischen der ersten RFID-Vorrichtung (2) und der ersten Erfassungsvorrichtung (12) zu einem Endzeitpunkt ein Funksignal zwischen der zweiten RFID-Vorrichtung (4) und der ersten Erfassungsvorrichtung (12) zu einem zweiten Kontrollzeitpunkt ausgetauscht wird, wobei der zweite Kontrollzeitpunkt zeitlich später als der Endzeitpunkt liegt,
- wobei die Zeitdifferenz zwischen dem Startzeitpunkt und dem Endzeitpunkt in Abhängigkeit des ersten Kontrollzeitpunktes und des zweiten Kontrollzeitpunktes bestimmt wird.

## Claims

1. Method for determining a time difference, having the steps:
- a) providing a motor vehicle (1), wherein the motor vehicle (1) has a first RFID device (2), wherein an identification information item is stored on the first RFID device (2), and the identification information item is provided for the identification of the motor vehicle (1) and can be assigned to the motor vehicle (1),
- b) providing a communication device (3), wherein the communication device (3) is provided for performing an electronic payment transaction, wherein the communication device is a smartphone;
- c) providing a first detection device (12), wherein the first detection device (12) is provided for an exchange of radio signals with the first RFID device (2), and wherein the first detection device (12) is provided for an exchange of radio signals with the communication device (3);
- d) exchanging a radio signal between the first RFID device (2) and the first detection device (12) at a start time;
- e) exchanging a radio signal between the first RFID device (2) and the first detection device (12) at an end time;
- f) determining a time difference between the start time and the end time;
- g) uniquely assigning an information item relating to an amount of money to the determined time difference;
- h) exchanging a radio signal between the communication device (3) and the first detection device (12) for transferring a payment of the amount of money;
- i) providing a barrier device (13), wherein the barrier device (13) is provided for blocking a route of the motor vehicle (1);
- j) providing an evaluation device (14), wherein the evaluation device (14) is provided for an exchange of signals with the first detection device (12), and wherein the evaluation device (14) is connected to the barrier device (13) in such a manner that the barrier device (13) can be controlled on the basis of a signal from the evaluation device (14) such that the route of the motor vehicle (1) can be unblocked or blocked;
- k) exchanging a signal between the evaluation device (14) and the first detection device (12);
- l) opening the barrier device (13) on the basis of the exchange of the signal between the evaluation device (14) and the first detection device (12);
- providing a second RFID device (4), wherein the second RFID device (4) is arranged in a tyre (6, 8) of the motor vehicle (1) or is arranged on a tyre (6, 8) of the motor vehicle (1), wherein a further identification information item is stored on the second RFID device (4), and the further identification information item is provided for the identification of the motor vehicle (1) and can be assigned to the motor vehicle (1), and wherein the first detection device (12) is provided for an exchange of radio signals with the first RFID device (2) and with the second RFID device (4) and with the communication device (3),
- wherein, after a radio signal has been exchanged between the first RFID device (2) and the first detection device (12) at a start time, a radio signal is exchanged between the second RFID device (4) and the first detection device (12) at a first monitoring time, wherein the first monitoring time is later than the start time;
- wherein, after a radio signal has been exchanged between the first RFID device (2) and the first detection device (12) at an end time, a radio signal is exchanged between the second RFID device (4) and the first detection device (12) at a second monitoring time, wherein the second monitoring time is later than the end time,
- wherein the time difference between the start time and the end time is determined on the basis of the first monitoring time and the second monitoring time.

## Revendications

1. Procédé permettant de déterminer une différence de temps, présentant les étapes consistant à :
- a) fournir un véhicule automobile (1), le véhicule automobile (1) présentant un premier dispositif RFID (2), une information d'identification étant stockée sur le premier dispositif RFID (2) et une information d'identification pour identifier le véhicule automobile (1) étant prévue et pouvant être associée au véhicule automobile (1),
- b) fournir un dispositif de communication (3), le dispositif de communication (3) étant prévu pour effectuer des opérations de paiement électronique, le dispositif de communication étant un smartphone ;
- c) fournir un premier dispositif de détection (12), le premier dispositif de détection (12) étant prévu pour un échange de signaux radio avec le premier dispositif RFID (2), et le premier dispositif de détection (12) étant prévu pour échanger des signaux radio avec le dispositif de communication (3) ;
- d) échanger un signal radio entre le premier dispositif RFID (2) et le premier dispositif de détection (12) à un instant initial ;
- e) échanger un signal radio entre le premier dispositif RFID (2) et le premier dispositif de détection (12) à un instant final ;
- f) déterminer une différence de temps entre l'instant initial et l'instant final ;
- g) associer de manière univoque une information concernant une somme d'argent à la différence de temps déterminée ;
- h) échanger un signal radio entre le dispositif de communication (3) et le premier dispositif de détection (12) pour transmettre un paiement de la somme d'argent ;
- i) fournir un dispositif de barrière (13), le dispositif de barrière (13) étant prévu pour barrer la route du véhicule automobile (1) ;
- j) fournir un dispositif d'évaluation (14), le dispositif d'évaluation (14) étant prévu pour un échange de signaux avec le premier dispositif de détection (12), et le dispositif d'évaluation (14) étant relié au dispositif de barrière (13) de telle sorte qu'en fonction d'un signal du dispositif d'évaluation (14), le dispositif de barrière (13) peut être commandé de telle sorte que le barrage de la route du véhicule automobile (1) soit annulé ou effectué ;
- k) échanger un signal entre le dispositif d'évaluation (14) et le premier dispositif de détection (12) ;
- I) ouvrir le dispositif de barrière (13) en fonction de l'échange du signal entre le dispositif d'évaluation (14) et le premier dispositif de détection (12) ;
- fournir un deuxième dispositif RFID (4), le deuxième dispositif RFID (4) étant disposé dans un pneu (6, 8) du véhicule automobile (1) ou étant disposé sur un pneu (6, 8) du véhicule automobile (1), dans lequel une information d'identification supplémentaire est stockée sur le deuxième dispositif RFID (4), et l'information d'identification supplémentaire est prévue pour identifier le véhicule automobile (1) et peut être associée au véhicule automobile (1), et dans lequel le premier dispositif de détection (12) est prévu pour échanger des signaux radio avec le premier dispositif RFID (2) et avec le deuxième dispositif RFID (4) et avec le dispositif de communication (3),
- dans lequel, après l'échange d'un signal radio entre le premier dispositif RFID (2) et le premier dispositif de détection (12) à un instant initial, un signal radio est échangé entre le deuxième dispositif RFID (4) et le premier dispositif de détection (12) à un premier instant de contrôle, le premier instant de contrôle étant ultérieur à l'instant initial ;
- dans lequel, après l'échange d'un signal radio entre le premier dispositif RFID (2) et le premier dispositif de détection (12) à un instant final, un signal radio est échangé entre le deuxième dispositif RFID (4) et le premier dispositif de détection (12) à un deuxième instant de contrôle, le deuxième instant de contrôle étant ultérieur à l'instant final,
- dans lequel la différence de temps entre l'instant initial et l'instant final est déterminée en fonction du premier instant de contrôle et du deuxième instant de contrôle.
